Europäisches Patentamt

European Patent Office

Office européen des brevets

(1) Publication number: **0 257 085**
**B1**

# EUROPEAN PATENT SPECIFICATION

(45) Date of publication of patent specification: **07.11.90**

(21) Application number: **87901699.6**

(22) Date of filing: **04.02.87**

(86) International application number:
**PCT/SE87/00051**

(87) International publication number:
**WO 87/05120 27.08.87 Gazette 87/19**

(51) Int. Cl.5: **G 02 B 6/42, H 04 B 10/00,
H 01 L 27/14**

(54) **A DEVICE FOR PROVIDING AN INFORMATION TRANSFERRING COMMUNICATION BETWEEN ELECTRIC COMPONENTS OR CIRCUITS.**

(30) Priority: **14.02.86 SE 8600656**

(43) Date of publication of application:
**02.03.88 Bulletin 88/09**

(45) Publication of the grant of the patent:
**07.11.90 Bulletin 90/45**

(84) Designated Contracting States:
**AT BE CH DE FR GB IT LI LU NL**

(56) References cited:
**EP-A-0 006 052
EP-A-0 063 626
WO-A-85/03179
GB-A-2 150 382
GB-A-2 162 336**

**Patent Abstracts of Japan, vol. 8, no. 78 (E-237)
abstract of JP 58-225746, December 1983.**

**IBM Technical Disclosure Bulletin, vol. 8, no. 8,
page 3532-3534, January 1986.**

(73) Proprietor: **Emil Lundgren Innovation AB
Artillerigatan 23
S-415 03 Göteborg (SE)**

(72) Inventor: **FERNSTRÖM, Mikael
Batterigatan 2 B
S-415 01 Göteborg (SE)**

(74) Representative: **MacFie, W.R. et al
Albihn West AB Stora Nygatan 15
S-411 08 Göteborg (SE)**

Courier Press, Leamington Spa, England.

## Description

The present inventinn relates to a device for information transference between electronic components, for instance LSI-circuits (large scale intergrated circuits), on a planar substrate by using a coherent narrow-waveband light beam, for instance a laser beam.

The problem of the present invention is to simplify the prior art optics communication technique into a technique which is more simple and flexible than the prior art and, additionally, which is competitive from a cost point of view.

A device for information transference between electronic components is disclosed in GB—A—2 162 336. Said devices comprises a transparent substrate containing electronic components positioned partially inside the substrate and constituting input and output elements, whereby the radiation propagates directly through the substrate material in a generally rectilinear manner.

Similar devices are disclosed in JP—A—58-2257746 and EP—A—6052. Transparent planar substrates with associated adjacent opto-electronic components are known from EP—A—63626 and WO—A—85/3179.

IBM Technical Disclosure Bulletin, Vol. 22, No. 8B, January 1980, page 3519 discloses the use of a beam of a narrow spectrum of coherent light from a laser as an information carrier between electric circuits on a substrate where optical light conductors are used for such beam between two circuits.

However, very surprisingly, the inventor has found that such a beam has a considerably broader field of application. In particular, it has been found that, basically, the use of slab shaped components having input- and output elements at narrow edge sides and well defined matching recesses in a planar side of a substrate together eliminate the need for a light conduit, i.e. an optical fibre, instead the light may propagate freely within the substrate.

Thus, the invention provides a device for infor-mation transference between electronic com-ponents on a planar substrate by using a coherent, narrow-waveband light beam, for instance a laser beam, as an information transferring medium, wherein the substrate is formed of a material that is transparent to said radiation, the electronic components being placed in predetermined positions, at least partially inside the transparent material, so that associated opto-electronic elements are positioned in regions thereof lying inside said material to constitute the component's input and output elements whereby said input and output elements are arranged for communication directly through the material of the substrate by means of said radiation, which is propagated generally rectilinearly in the material and without reflection at the substrate's exterior surfaces.

The device is characterized in that the electronic components are slab shaped and have been in well defined matching recesses in a planar face of the substrate, and that the input and output elements of each electronic component are positioned on at least one of the narrow edge sides of the component to allow receiving or transmitting of radiation from said output and input elements, respectively.

In order to eliminate stray illumination inside the substrate and undesired reflection of radiation in the narrow edge sides of the substrate, the contact edge portions of the electronic component thereof which are not actively used are coated by a radiation reflecting material.

In order to prevent an undesired interference between radiation inside the substrate, said input and output elements are placed such that parallel, co-existent rays of radiation are eliminated. As there are involved relatively short propagation distances; normally the substrate has a dimension not larger than A4-shape, the input and output elements may be packed relatively tight without any risk for said parallel co-existence.

Today there is available a well developed mechanic microtechnique which allows an accurate definition of position. Furthermore electrochemical and photographic semiconductor techniques also allow a very exact positioning of components and component parts of an electric circuit.

In order to provide a current supply to the electric circuits on the substrate the arrangement preferably is such that the two planar surfaces of the substrate are externally provided with line conductors which are electrically connectable to said components.

In order to further improve the flexibility, the input and output elements of the components can be selectively connected to the line conductors to provide a programmable arrangement of connection paths between elements within an electronic component.

The invention will now be exemplified by reference to the accompanying drawings, where

Figure 1 in a view from above shows a substrate according to the invention provided with circuits,

Figure 2 in a perspective view shows on of the electric circuits on/in the substrate,

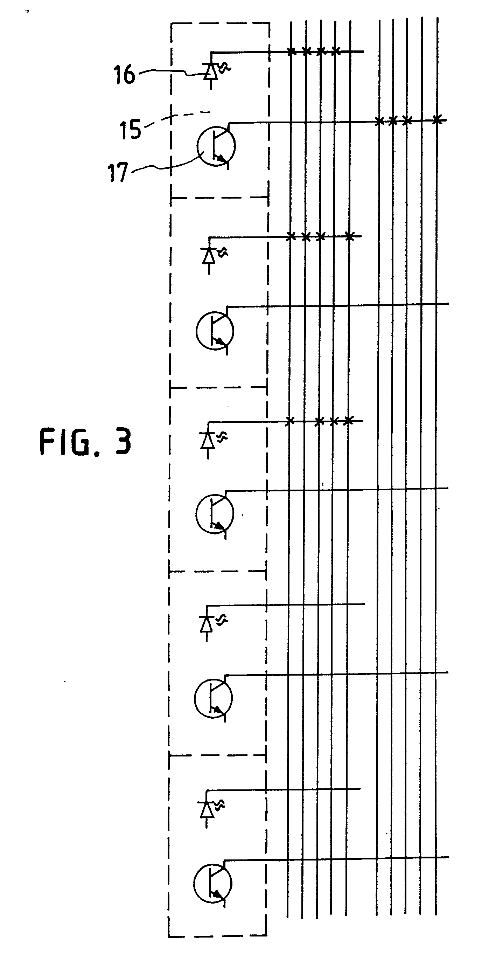

Figure 3 shows a programmable arrangement of inputs and outputs to one edge side of the circuit in Figure 2, and

Figure 4 in an end view shows the substrate according to Figure 1 and a cover or coating for providing electric connection facilities for circuits on/in the substrate.

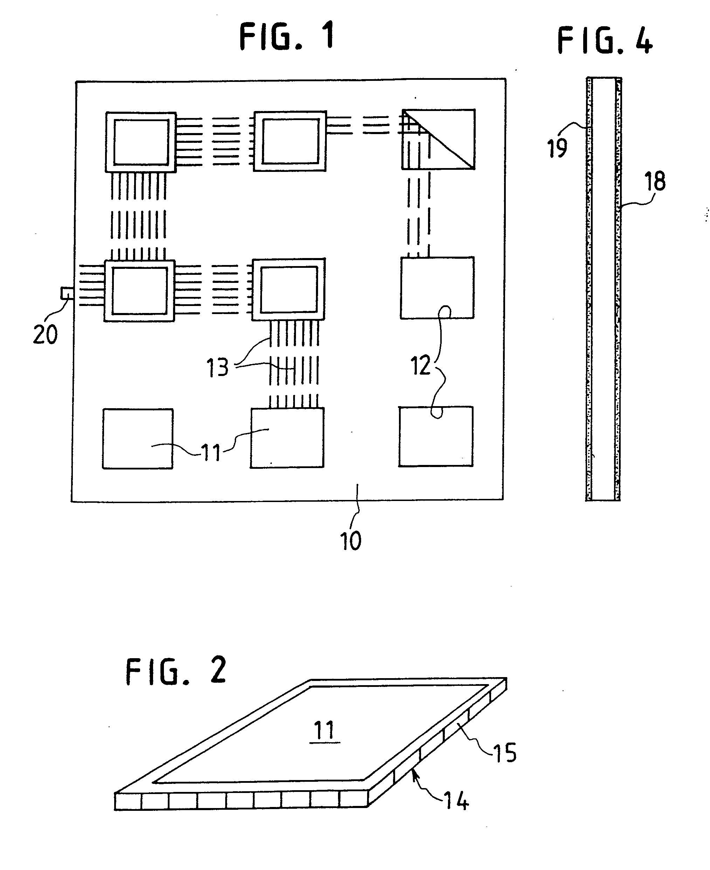

The substrate 10 in Figure 1 may for instance comprise glass, plastics material which is shock resistant and of high strength, for instance polystyrene, possibly some curable plastics material or similar. The necessary condition is that the material is transparent to the actual narrow spectrum of coherent rediation that is used for information transfer between circuits 11 on/in the substrate. The type of radiation in the actual embodiment is radiation from so called laser diodes, i.e. diodes which when excited radiate a coherent light of a specific wave length or within a very narrow spectral interval.

The circuits 11, which for instance are of the LSI-type, are recessed in the material of the substrate in very well defined and accurately positioned recesses 12 in the substrate. Said recesses are formed by using the high technology micromechanical technique that is available today, they are formed either when moulding or injection moulding the substrate or at a later processing stage. The broken lines 13 indicate the information transferring radiation path available in the substrate, between several circuits 11.

Along the edge sides 14 of individual circuits 11 there are "cells" 15, each one containing a laser diode 16 and a photosensitive transistor 17. Each such cell may be programmed, for instance by PLA-technique (programmable logic array technique), for being a radiation emitting or radiation receiving cell depending on whether the diode 16 or the phototransistor 17 is activated by the programming operation.

The portions of the free surface of each cell 15 which are not used actively for information tranfer are coated by some radiation attenuating or reflection preventing material for preventing stray radiation inside the substrate. The total surface of a substrate 10 normally is not larger than maximum an A4-page, meaning that active elements 16, 17 may be packed relatively close without risk for interference between the rays of radiation. To obtain interference there is necessary a co-existence in one and the same direction, in the three dimensional space as well as time, which will not be the case with the moderate radiation distances in the present context.

In the figures there have not been shown any crossing radiation paths, however, such an arrangement is basically possible.

In order to supply the circuits on/in the substrate with current there preferably are arranged electric conducting layers 18, 19 covering the entire two broad sides of the substrate, for instance as conductive coatings. Such layers form connectors to the electric DC-source normally used for energy supply to the circuits on the substrate.

Along the edge sides of the substrate there are the necssary number of converters 20 or transfer elements for transferring and/or processing output signals from the several circuits on the substrate.

## Claims

1. A device for information transference between electronic components on a planar substrate by using a coherent, narrow-waveband light beam, for instance a laser beam, as an information transferring medium, wherein the substrate (10) is formed of a material that is transparent to said radiation, the electronic components (11) being placed in predetermined positions, at least partially inside the transparent material, so that associated opto-electronic elements are positioned in regions thereof lying inside said material to constitute the component's input and output elements (17 and 16, respectively) whereby said input and output elements are arranged for communication directly through the material of the substrate by means of said radiation (13), which is propagated generally rectilinearly in the material and without reflection at the substrate's exterior surfaces characterized in that the electronic components are slab shaped and have been placed in well defined matching recesses (12) in a planar face of the substrate, and that the input and output elements of each electronic component are positioned on at least one of the narrow edge sides of the component (17 and 16, respectively) to allow receiving or transmitting of radiation from said output and input elements, respectively.

2. A device according to claim 1, characterized in that the contact edge portions of the electronic component which are not actively used are coated by a radiation reflection attenuating material.

3. A device according to claim 2, characterized in that the said input and output elements (17, 16) are placed such that rays of radiation are not coexistent in space and time.

4. A device according to claim 2, characterized in that the two planar faces of the substrate are externally provided with line conductors (18, 19), which are electrically connectable to said components.

5. A device according to claim 4, characterized in that the said input and output elements can be selectively connected to the line conductors to provide a programmable arrangement (Figure 3) of connection paths between elements within an electronic component.

## Patentansprüche

1. Einrichtung zur Informationsübertragung zwischen elektronischen Komponenten auf einem ebenen Substrat unter Verwendung eines kohärenten, schmalbandigen Lichtstrahls, beispielsweise eines Laserstrahls als Informationsübertragunsmedium, wobei das Substrat (10) aus einem für die Strahlung transparenten Material gebildet ist und die elektronischen Komponenten (11) an vorgegebenen Stellen zumindest teilweise innerhalb des transparenten Materials angeordnet sind, so daß zugeordnete optoelektronische Elemente zur Bildung von Eingangs- und Ausgangselementen (17 bzw. 16) der Komponenten in innerhalb des Materials liegenden Bereichen desselben angeordnet sind, woei die Eingangs- und Ausgangeselemente zur Kommunikation direkt durch das Substratmaterial mittels der sich im wesentlichen geradlinig in dem Material und ohne Reflektion an den äußeren Flächen des Substrats ausbreitenden Strahlung (13) angeordnet sind, dadurch gekennzeichnet, daß die elektronischen Komponenten scheibenförmig und in genau definierten passenden Aussparungen (12) in einer ebenenen Fläche des Substrats angeordnet sind, und daß die Eingangs- und Ausgangselemente (16 bzw. 17) jeder elektronischen Komponente sich an mindestens einer der schmalen Seitenkanten der Komponenten befinden, um ein Empfangen oder Aussenden der Strahlung für die Ausgangs- bzw. Eingangselemente zu erlauben.

2. Einrichtung nach Anspruch 1, dadurch gekennzeichnet, daß die Kontaktakantenbereiche der elektronischen Komponenten, die nicht aktiv benutzt werden, mit einem die Refektion der Strahlung dämpfenden Material beschichtet sind.

3. Einrichtung nach Anspruch 2, dadurch gekennzeichnet, daß die Eingangs- und Ausgangselemente (17, 16) so angeordnet sind, daß keine Strahlungsbündel räumlich und zeitlich übereinstimmend vorliegen.

4. Einrichtung nach Anspruch 2, dadurch gekennzeichnet, daß die beiden ebenen Flächen des Substrats außen mit Linienkontakten (18, 19) versehen sind, die mit den Komponenten elektrisch verbindbar sind.

5. Einrichtung nach Anspruch 4, dadurch gekennzeichnet, daß die Eingangs- und Ausgangselemente wahlweise mit den Linienkontakten verbindbar sind, um zwischen Elementen in einer elektronischen Komponente eine programmierbare Anordnung (Fig. 3) von Verbindungswegen zu schaffen.

## Revendications

1. Dispositif opour le transfert d'informations entre des composants électroniques sur un substrat plan, au moyen d'un faisceau de lumière cohérente à bande spectrale étroite, par exemple un faisceau laser, comme support de communication d'informations, dans lequel le substrat (10) est en une matière qui est transparente audit rayonnement, les composants électroniques (11) étant placés dans des positions prédéterminées, au moins partiellement à l'intérieure de la matière transparente, de sorte que les éléments optoélectroniques associés sont situés dans leurs régions se trouvant à l'intérieur de ladite matière pour constituer les éléments d'entrée et de sortie des composants (17 et 16, respectivement), lesdits éléments d'entrée et de sortie étant ainsi disposé pour une communication directe à travers la matière du substrat au moyen dudit rayonnement (13), qui est propagé de façon sensiblement rectiligne dans la matière et sans réflexion aux surfaces extérieures du substrat, caractérisé en ce que les composants électroniques sont en forme de plaquette et ont été placés dans des évidements correspondants bien définis (12) ménagés dans une face plane du substrat, et en ce que les éléments d'entrée et de sortie de chaque composant électronique sont situés sur au moins une des faces de bord étroites du composant (17 et 16, respectivement) pour permettre la réception ou l'émission de rayonnement par lesdits éléments de sortie et d'entrée, respectivement.

2. Dispositif suivant la revendication 1, caractérisé en ce que les parties de bord de contact du composant électronique qui ne sont pas activement utilisées sont revêtues d'une matière atténuant la réflexion du rayonnement.

3. Dispositif suivant la revendication 2, caractérisé en ce que lesdits éléments d'entrée et de sortie (17, 16) sont placés de sorte que les rayons de rayonnement ne sont pas coexistants dans l'espace et le temps.

4. Dispositif suivant la revendication 2, caractérisé en ce que les deux faces planes du substrat comportent extérieurement des conducteurs de ligne (18, 19) qui sont electriquement connectables auxdits composants.

5. Dispositif suivant la revendication 4, caractérisé en ce que lesdits éléments d'entrée et de sortie peuvent être sélectivement connectés aux conducteurs de ligne pour constituer un agencement programmable (figure 3) de chemins de connexion entre éléments à l'intérieure d'un composant électronique.

# FIG. 1

# FIG. 4

# FIG. 2

FIG. 3